# EUROPÄISCHE PATENTSCHRIFT

(11) **EP 3 980 278 B1**
(45) Veröffentlichungstag und Bekanntmachung des Hinweises auf die Patenterteilung: **06.03.2024**
(21) Anmeldenummer: 20730215.9
(22) Anmeldetag: 28.05.2020
(51) Int. Cl.: B60B 27/02, B60B 27/00

(54) **RADNABE, HILFSANGETRIEBENES FAHRZEUG MIT DER RADNABE UND KLAMMERANORDNUNG**
WHEEL HUB, AUXILIARY POWERED VEHICLE WITH SUCH A HUB AND CLIP ARRANGEMENT
MOYEU DE ROUE, VÉHICULE PROPULSION AUXILIAIRE ET DISPOSITION DE SUPPORT

(30) Priorität: 06.06.2019 DE 102019115401
(43) Veröffentlichungstag der Anmeldung: 13.04.2022
(73) Patentinhaber: Porsche eBike Performance GmbH, 85521 Ottobrunn (DE)
(72) Erfinder: PIELE, Theodor, 82131 Gauting (DE); SAMMÜLLER, Herbert, 85774 Unterföhring (DE)
(74) Vertreter: Epping - Hermann - Fischer
(86) Internationale Anmeldenummer: PCT/EP2020/064829
(87) Internationale Veröffentlichungsnummer: WO 2020/245026

(56) Entgegenhaltungen:
- EP-A1- 3 258 128
- CN-U- 208 292 453
- DE-A1-102010 011 461
- DE-A1-102012 016 903
- DE-A1-102013 203 622
- DE-T5-112016 005 200
- KR-A- 20170 132 015
- US-A1- 2019 025 337

## Beschreibung

Die Erfindung betrifft eine Radnabe für ein Antriebsrad eines Fahrzeugs, ein hilfsangetriebenes Fahrrad und eine Klammeranordnung für die Radnabe.

Für die Erfüllung unterschiedlicher individueller Mobilitätsbedürfnisse gewinnen elektrisch angetriebene Fahrzeuge immer mehr an Bedeutung. Insbesondere ist das Elektrofahrrad auf dem Vormarsch, das ein von einem Elektromotor hilfsangetriebenes Fahrrad ist. Die elektrische Fahrunterstützung wird herkömmlich durch Pedalieren angefordert, indem entsprechend stark die an den Tretkurbeln des Fahrrads befestigten Pedale wechselseitig nach unten gedrückt werden. Zu einer Drehmomentübertragung auf das Antriebsrad des Fahrrads, in der Regel das Hinterrad, ist an den Tretkurbeln ein Kettenblatt montiert, das über eine Kette mit einem Ritzel gekoppelt ist, das in Antriebsrichtung drehstarr am Hinterrad montiert ist. Der Elektromotor ist herkömmlich in der Radnabe des Hinterrads als ein Nabenmotor untergebracht, dessen Versorgung mit elektrischer Energie von Akkumulatorzellen bewerkstelligt ist.

Die DE 10 2010 011 461 A1 betrifft eine Radlagervorrichtung in einem Kraftfahrzeug mit einem Achszapfen und einem gegenüber diesem verdrehbaren Radflansch zur Aufnahme eines Rads mittels eines Radlagers mit einem auf dem Achszapfen aufgenommenen Innenring und einem mit dem Rad verbindbaren Radflansch aufnehmenden Außenring sowie zwischen Innenring und Außenring angeordneten und auf Laufbahnen dieser abwälzenden Wälzkörpern sowie einer Sensoreinrichtung mit zumindest einem Sensor zur Erfassung zumindest einer für die Radlagervorrichtung relevanten Größe.

Die CN 208 292 453 U bezieht sich auf eine Art von Betriebszustandserkennungsvorrichtung eines Aufzugs ohne Basisstation.

Um den Elektromotor zu steuern, kann eine Messung einer Bewegung des Elektrofahrrads vorgesehen sein. Bei der Messung der Bewegung kann es sich beispielsweise um eine Geschwindigkeit des Elektrofahrrads handeln, beispielsweise um zu garantieren, dass das Elektrofahrrad aus Sicherheitsgründen eine Höchstgeschwindigkeit nicht überschreitet. Die Geschwindigkeit des Elektrofahrrads kann zum Beispiel bestimmt werden, indem die Drehzahl einer Nabe bestimmt wird. Dies kann beispielsweise mittels eines Polrings und eines Magnetfeldsensors erfolgen, die in der Radnabe untergebracht sind. Der Polring weist abwechselnd in seiner Umfangsrichtung magnetische Nordpole und magnetische Südpole auf und der Magnetfeldsensor misst das von dem Polring ausgehende Magnetfeld. Aus dem sich zeitlich ändernden Magnetfeld kann auf eine Relativgeschwindigkeit zwischen dem Polring und dem Magnetfeldsensor geschlossen werden. Nachteilig ist hierbei, dass der Magnetfeldsensor nur optimal funktioniert, wenn der Magnetfeldsensor in einem vorherbestimmten Abstandsbereich zu dem Polring angeordnet ist, wobei der Abstandsbereich sehr eng sein kann. Wenn der Magnetfeldsensor außerhalb des Abstandsbereichs angeordnet ist, ist die Messung der Relativbewegung zwischen dem Polring und dem Magnetfeldsensor nur ungenau.

Aufgabe der Erfindung ist es daher, eine Vorrichtung für ein Antriebsrad eines Fahrzeugs zu schaffen, wobei mit der Vorrichtung eine genaue Messung einer Bewegung erfolgen kann.

Die erfindungsgemäße Radnabe für ein Antriebsrad eines Fahrzeugs weist eine Radachse, eine Klammer, die eine Außenfläche der Radachse C-förmig umgreift und die verdrehfest gegen die Radachse befestigt ist, einen Magnetfeldsensor, der an der Klammer befestigt ist, und einen Polring auf, der konzentrisch um die Radachse und in einem Abstand zu dem Magnetfeldsensor angeordnet sowie rotierbar relativ zu der Radachse gelagert ist, wobei der Magnetfeldsensor eingerichtet ist, ein von dem Polring ausgehendes Magnetfeld zu detektieren, so dass auf eine Bewegung des Polrings relativ zu der Radachse zurückschließbar ist.

Mittels der Klammer kann der Magnetfeldsensor in einem definierten Abstand zu dem Polring angeordnet werden. Der definierte Abstand kann dabei so gewählt werden, dass er in einem Abstandsbereich, in dem der Magnetfeldsensor optimal funktioniert, zu dem Polring angeordnet ist. Dadurch, dass der Magnetfeldsensor in dem Abstandsbereich angeordnet ist, ist eine Vorrichtung geschaffen, mit der eine Messung der Bewegung des Polrings relativ zu der Radachse mit einer hohen Genauigkeit durchgeführt werden kann.

Der Polring weist abwechselnd in seiner Umfangsrichtung magnetische Nordpole und magnetische Südpole auf. Prinzipiell kann die Erfindung mit einem einzelnen der Nordpole und einem einzelnen der Südpole ausgeführt werden, wobei die Genauigkeit der Messung der Bewegung des Polrings relativ zu der Radachse jedoch höher ist, wenn eine Mehrzahl der Nordpole und der Südpole vorgesehen ist.

Der Magnetfeldsensor kann beispielweise eingerichtet sein, eine Geschwindigkeit des Polrings relativ zu der Radachse zu bestimmen. Alternativ ist denkbar, dass der Magnetfeldsensor eingerichtet ist, eine Richtung der Bewegung des Polrings relativ zu der Radachse zu bestimmen. Dadurch kann vorteilhaft zwischen einer Vorwärtsbewegung und einer Rückwärtsbewegung des Antriebsrads unterschieden werden. Beispielhafte Sensoren sind die Sensoren AK8777B und AK8778B der Firma Asahi Kasei. Der Magnetfeldsensor kann zudem eingerichtet sein, zusätzlich zu der Richtung der Bewegung des Polrings relativ zu der Radachse auch die Geschwindigkeit des Polrings relativ zu der Radachse zu bestimmen. Dies kann ebenfalls von den Sensoren AK8777B und AK8778B der Firma Asahi Kasei bewerkstelligt werden.

Bei der Geschwindigkeit kann es sich beispielsweise um eine Drehzahl und/oder eine Winkelgeschwindigkeit handeln. Auch ist es möglich, die Drehzahl und/oder die Winkelgeschwindigkeit mit einem Durchmesser des Antriebsrads zu verrechnen, um daraus eine Fahrzeuggeschwindigkeit eines das Antriebsrad aufweisenden Fahrzeugs zu bestimmen. Bei dem Magnetfeldsensor kann es sich beispielsweise um einen Hall-Sensor handeln. Bei dem Abstand kann es sich um einen Axialabstand und/oder einen Radialabstand handeln.

Die Klammer kann kraftschlüssig an der Radachse befestigt sein, so dass die Klammer verdrehfest gegen die Radachse befestigt ist. Dazu kann die Klammer in ihrem Einbauzustand unter einer mechanischen Spannung stehen. Durch das kraftschlüssige Befestigen der Klammer an der Radachse ist es nicht notwendig, ein Befestigungsmittel, wie beispielsweise eine Schraube oder eine Niete, vorzusehen. Dadurch kann die Klammer durch ein einfaches Überstülpen über die Radachse an der Radachse befestigt werden. Zudem kann in dem Fall, dass der Magnetfeldsensor fehlerhaft funktioniert, der Magnetfeldsensor einfach getauscht werden, indem die Klammer mitsamt dem Magnetfeldsensor getauscht wird. Zudem ist denkbar, dass die Klammer formschlüssig an der Radachse befestigt ist, so dass die Klammer verdrehfest gegen die Radachse befestigt ist. Auch ist es denkbar, die Klammer sowohl kraftschlüssig als auch formschlüssig an der Radachse zu befestigen.

Es ist bevorzugt, dass die Radnabe eine Riemenscheibe oder einen Ritzelträger, auf den zum Antreiben des Antriebsrads mindestens ein Ritzel drehstarr montierbar ist, eine Übertragungshülse, die mit der Riemenscheibe oder dem Ritzelträger drehstarr gekuppelt ist sowie konzentrisch um die Radachse und rotierbar relativ zu der Radachse gelagert ist, ein Nabengehäuse und einen Freilauf aufweist, via den die Übertragungshülse mit dem Nabengehäuse gekuppelt ist, wobei der Polring drehstarr an der Übertragungshülse befestigt ist. Dadurch kann ein Drehmoment von der Riemenscheibe oder dem Ritzelträger via die Übertragungshülse und via den Freilauf auf das Nabengehäuse übertragen werden. Weil der Polring drehstarr an der Übertragungshülse befestigt ist, dreht sich der Polring relativ zu dem verdrehfest gegen die Radachse befestigten Magnetfeldsensor immer dann, wenn der Ritzelträger oder die Riemenscheibe angetrieben wird. Dies ist beispielsweise der Fall, wenn das Ritzel oder die Riemenscheibe auf den Ritzelträger drehstarr montiert ist und die Riemenscheiber oder das Ritzel durch ein Pedalieren eines Fahrers angetrieben wird. Hört der Fahrer hingegen auf zu Pedalieren, steht die Riemenscheibe oder das Ritzel zusammen mit dem Ritzelträger und der Übertragungshülse still gegenüber dem Magnetfeldsensor. Durch das Vorsehen des Freilaufs kann sich in diesem Fall das Nabengehäuse jedoch noch weiter gegenüber der Radachse drehen. Damit misst der Magnetfeldsensor eine relative Bewegung zwischen dem Polring und der Radachse immer dann, wenn der Fahrer pedaliert und keine Bewegung zwischen dem Polring und der Radachse, wenn der Fahrer nicht pedaliert. Dadurch ist es beispielsweise möglich, in dem Fall, dass die Radnabe in einem Elektrofahrrad mit einem Motor vorgesehen ist, den Motor unter Zuhilfenahme der gemessenen Bewegung zwischen dem Polring und der Radachse sofort auszuschalten, wenn der Fahrer aufhört zu pedalieren. In dem Fall, dass der Magnetfeldsensor vorgesehen ist, der eingerichtet ist, die Richtung der Bewegung des Polrings relativ zu der Radachse zu bestimmen, kann der Motor auch sofort ausgeschaltet werden, wenn der Fahrer rückwärts pedaliert. Bei dem Motor kann es sich um einen Elektromotor handeln.

Es ist bevorzugt, dass die Radachse zumindest teilweise als eine Hohlwelle ausgeführt ist und somit einen Hohlraum aufweist sowie ein Radachsendurchgangsloch aufweist, das sich durch die Radachse von der Außenfläche der Radachse bis zu dem Hohlraum erstreckt, wobei die Klammer ein Klammerdurchgangsloch und einen das Klammerdurchgangsloch begrenzenden Bereich aufweist, der formschlüssig in das Radachsendurchgangsloch eingreift. Dadurch wird die Klammer noch verdrehfester an der Radachse befestigt und zudem wird ein axiales Verschieben der Klammer unterbunden. Zudem können das Klammerdurchgangsloch und das Radachsendurchgangsloch vorteilhaft benutzt werden, um eine elektrische Verkabelung des Magnetfeldsensors in den Hohlraum zu führen.

Eine elektrische Verkabelung des Magnetfeldsensors ist bevorzugt durch das Klammerdurchgangsloch und durch das Radachsendurchgangsloch in den Hohlraum geführt. Die elektrische Verkabelung des Magnetfeldsensors kann dann an einer anderen Stelle der Radachse wieder aus der Radachse herausgeführt werden. Bei der anderen Stelle kann es sich beispielsweise um eine Stirnseite der Radachse handeln und/oder die Radachse kann eine Radachsenaussparung aufweisen, die sich durch die Radachse von der Außenfläche der Radachse bis zu dem Hohlraum erstreckt.

Es ist bevorzugt, dass die Radachse an der Außenfläche der Radachse einen abgeflachten Bereich aufweist und eine Innenfläche der Klammer zwei kreisbogenförmige Abschnitte und dazwischen einen geraden Abschnitt aufweist, wobei die zwei kreisbogenförmigen Abschnitte und der gerade Abschnitt in Umfangsrichtung der Radachse nebeneinander angeordnet sind, wobei der gerade Abschnitt den abgeflachten Bereich kontaktiert und die kreisbogenförmigen Abschnitte die benachbart zu dem abgeflachten Bereich angeordneten Bereiche der Radachse kontaktiert. Dadurch ist die Klammer formschlüssig an der Radachse zu befestigen, wodurch die Klammer noch verdrehfester an der Radachse befestigt ist. In dem Fall, dass das Radachsendurchgangsloch vorgesehen ist, ist es bevorzugt, dass das Radachsendurchgangsloch in dem abgeflachten Bereich vorgesehen ist. Dadurch steht einer Verkabelung des Magnetfeldsensors, die durch das Radachsendurchgangsloch hindurch geführt ist, ein größerer Raum zur Verfügung als es ohne den abgeflachten Bereich der Fall ist. Durch den größeren Raum kann die Verkabelung mit einem größeren Krümmungsradius geführt werden als es ohne den abgeflachten Bereich der Fall wäre, wodurch ein Kabelbruch weniger wahrscheinlich ist.

Es ist bevorzugt, dass der Magnetfeldsensor an einer Außenfläche der Klammer angeordnet ist. Dabei ist bevorzugt, dass die Klammer einen L-förmigen Vorsprung mit zwei Schenkeln aufweist, der von der Außenfläche der Klammer vorsteht, und die Radnabe eine Magnetfeldsensorleiterplatte aufweist, auf der der Magnetfeldsensor angeordnet ist, wobei die Magnetfeldsensorleiterplatte zwischen einem der beiden Schenkel und der Außenfläche der Klammer eingeklemmt ist. Dadurch ist die Magnetfeldsensorleiterplatte zusammen mit dem Magnetfeldsensor an der Klammer befestigt. Die Montage der Magnetfeldsensorleiterplatte an der Klammer ist durch das Klemmen relativ einfach und es braucht beispielsweise kein Kleben durchgeführt werden. Besonders bevorzugt ist, dass die Magnetfeldsensorleiterplatte an den anderen der beiden Schenkel anstößt. Dadurch ist auch die Position der Magnetfeldsensorleiterplatte in Umfangsrichtung festgelegt.

Es ist bevorzugt, dass die Klammer aus einem elastischen Material ist, insbesondere einem elastischen Kunststoff. Weil die Klammer durch ihr elastisches Material beim Überstülpen über die Radachse in einer Radialrichtung der Radachse nachgeben kann, kann die Klammer vorteilhaft einfach an der Radachse montiert werden. Zudem dämpft das elastische Material Schwingungen, die von der Radachse auf den Magnetfeldsensor übertragen werden, wodurch dieser wenigen Schwingungen ausgesetzt ist. Dadurch ist zum einen die Lebensdauer des Magnetfeldsensors lang und zum anderen ändert der Magnetfeldsensor während der Schwingungen kaum den Abstand zu dem Polring, wodurch die Genauigkeit beim Messen der Bewegung auch bei einem Auftreten der Schwingungen hoch ist.

Die Radnabe weist bevorzugt eine Drehmomentmessvorrichtung auf. Damit ist neben der Bewegung eine weitere Information erhältlich. Beispielsweise kann mittels der Drehmomentmessvorrichtung in dem Fall, dass die Radnabe in dem Elektrofahrrad mit dem Motor vorgesehen ist, in dem Fall, dass der Fahrer bergauf fährt und ein hohes Drehmoment aufbringt, der Motor den Fahrer mit einer hohen Leistung unterstützen und in dem Fall, dass der Fahrer bergab fährt und nur ein niedriges Drehmoment aufbringt, der Motor den Fahrer nur mit einer niedrigen Leistung unterstützen.

Es ist bevorzugt, dass die Radnabe ein erstes Steckerteil aufweist, das an der Klammer befestigt ist, und die Drehmomentmessvorrichtung eine Drehmomentmessleiterplatte mit einem zweiten Steckerteil aufweist, das an der Drehmomentmessleiterplatte befestigt ist und mit dem ersten Steckerteil in Eingriff steht. Damit legt die Klammer via das erste Steckerteil und das zweite Steckerteil die Position der Drehmomentmessleiterplatte fest. Zudem ist es möglich eine elektrische Verkabelung des Magnetfeldsensors und eine elektrische Verkabelung der Drehmomentmessvorrichtung entlang eines einzelnen Kabelstrangs zu führen. Alternativ zu den Steckerteilen kann die Drehmomentmesseiterplatte auch mit der Klammer fest verbunden sein.

Es ist bevorzugt, dass eine elektrische Verkabelung der Drehmomentmessvorrichtung via das erste Steckerteil und via das zweite Steckerteil geführt ist. In dem Fall, dass das Radachsendurchgangsloch und das Klammerdurchgangsloch vorgesehen sind, ist es bevorzugt, dass die elektrische Verkabelung der Drehmomentmessvorrichtung durch das Radachsendurchgangsloch und das Klammerdurchgangsloch bis in den Hohlraum geführt ist.

Es ist bevorzugt, dass die Radnabe eine Riemenscheibe oder einen Ritzelträger, auf den zum Antreiben des Antriebsrads mindestens ein Ritzel drehstarr montierbar ist, eine Übertragungshülse, die mit dem Ritzelträger oder der Riemenscheibe drehstarr gekuppelt ist sowie konzentrisch um die Radachse und rotierbar relativ zu der Radachse gelagert ist, ein Nabengehäuse und einen Freilauf aufweist, via den die Übertragungshülse mit dem Nabengehäuse gekuppelt ist, wobei die Übertragungshülse ein magnetisch codiertes Material aufweist, dessen magnetische Eigenschaften sich unter dem Einfluss eines auf die Übertragungshülse wirkenden Drehmoments ändern, und die Drehmomentmessvorrichtung einen an der Drehmomentmessleiterplatte angeordneten Sensor aufweist, der eingerichtet ist, die sich ändernden magnetischen Eigenschaften zu detektieren. Die magnetischen Eigenschaften ändern sich aufgrund von Magnetostriktion. Aus den sich ändernden magnetischen Eigenschaften, die von dem Sensor detektiert werden, kann auf das Drehmoment zurückgeschlossen werden, das an der Übertragungshülse anliegt und ausgehend von dem Ritzelträger auf das Nabengehäuse übertragen wird. Der Sensor kann eine Spule oder mehrere Spulen aufweisen.

Es ist bevorzugt, dass die Radnabe einen Motor aufweist, der eingerichtet ist, das Antriebsrad anzutreiben. Bei dem Motor kann es sich beispielsweise um einen Elektromotor handeln. Besonders bevorzugt ist der Motor innerhalb des Nabengehäuses der Radnabe angeordnet. Zudem ist besonders bevorzugt, dass der Motor eingerichtet ist, ein Motordrehmoment auf das Nabengehäuse zu übertragen, wobei das Motordrehmoment nicht via die Übertragungshülse übertragen wird. Dadurch wird vorteilhaft erreicht, dass nur dass vom Fahrer aufgebrachte Drehmoment von der Übertragungshülse gemessen wird.

Das erfindungsgemäße hilfsangetriebene Fahrzeug weist die Radnabe mit dem Motor, das Antriebsrad und eine Steuerungseinrichtung auf, die eingerichtet ist, den Motor abgestimmt auf von dem Magnetfeldsensor gemessene Messdaten zu steuern. Es ist bevorzugt, dass die Steuerungseinrichtung eingerichtet ist, den Motor zusätzlich abgestimmt auf von der Drehmomentmessvorrichtung gemessene Messdaten zu steuern. Das hilfsangetriebene Fahrzeug ist insbesondere ein Elektrofahrrad mit einem Speicher, der eingerichtet ist, elektrische Energie zu speichern und an den Motor abzugeben. Der Speicher kann beispielsweise Akkumulatorzellen aufweisen.

Die erfindungsgemäße Klammeranordnung für die Radnabe mit einer Radachse weist eine Klammer auf, die eingerichtet ist, die Radachse C-förmig zu umgreifen und verdrehfest gegen die Radachse befestigt zu sein, und einen Magnetfeldsensor, der an der Klammer befestigt ist.

Es ist bevorzugt, dass die Klammer ein Klammerdurchgangsloch und einen das Klammerdurchgangsloch begrenzenden Bereich aufweist, der von einer Innenfläche der Klammer vorsteht. Besonders bevorzugt ist, dass eine elektrische Verkabelung des Magnetfeldsensors durch das Klammerdurchgangsloch geführt ist. Es ist bevorzugt, dass eine Innenfläche der Klammer zwei kreisbogenförmige Abschnitte und dazwischen einen geraden Abschnitt aufweist, wobei die zwei kreisbogenförmigen Abschnitte und der gerade Abschnitt in einer Richtung von einem ersten Längsende der Klammer zu einem zweiten Längsende der Klammer nebeneinander angeordnet sind.

Es ist bevorzugt, dass der Magnetfeldsensor an einer Außenfläche der Klammer angeordnet ist. Dabei ist besonders bevorzugt, dass die Klammer einen L-förmigen Vorsprung mit zwei Schenkeln aufweist, der von der Außenfläche der Klammer vorsteht, und die Klammeranordnung eine Magnetfeldsensorleiterplatte aufweist, auf der der Magnetfeldsensor angeordnet ist, wobei die Magnetfeldsensorleiterplatte zwischen einem der beiden Schenkel und der Außenfläche der Klammer eingeklemmt ist. Zudem kann die Magnetfeldsensorleiterplatte an den anderen der beiden Schenkel anstoßen.

Es ist bevorzugt, dass die Klammer aus einem elastischen Material ist, insbesondere einem elastischen Kunststoff.

Es ist bevorzugt, dass die Klammer ein erstes Steckerteil aufweist, das an der Klammer befestigt ist und eingerichtet ist, mit einem zweiten Steckerteil einzugreifen. Dabei sind besonders bevorzugt das erste Steckerteil und das zweite Steckerteil eingerichtet, Signale eines von dem Magnetfeldsensor verschiedenen Sensors zu übertragen.

Es ist bevorzugt, dass die Klammer in Umfangsrichtung der Radachse einen Winkel von größer 180° überstreicht. Besonders bevorzugt ist der Winkel größer als 190°.

Im Folgenden wird anhand der beigefügten schematischen Zeichnungen die Erfindung näher erläutert.
Figur 1 zeigt eine perspektivische Ansicht einer Radnabe, wobei die Radnabe zusammengebaut ist.
Figur 2 zeigt einen Längsschnitt durch die Radnabe.
Figur 3 zeigt eine perspektivische Ansicht der Radnabe, wobei die Radnabe offen ist.
Figur 4 zeigt einen Querschnitt durch die Radnabe.
Figur 5 zeigt eine perspektivische Ansicht einer Klammer.
Figur 6 zeigt eine Draufsicht auf die Klammer.
Figur 7 ist ähnlich wie Figur 2, zeigt jedoch einen größeren Ausschnitt der Radnabe.

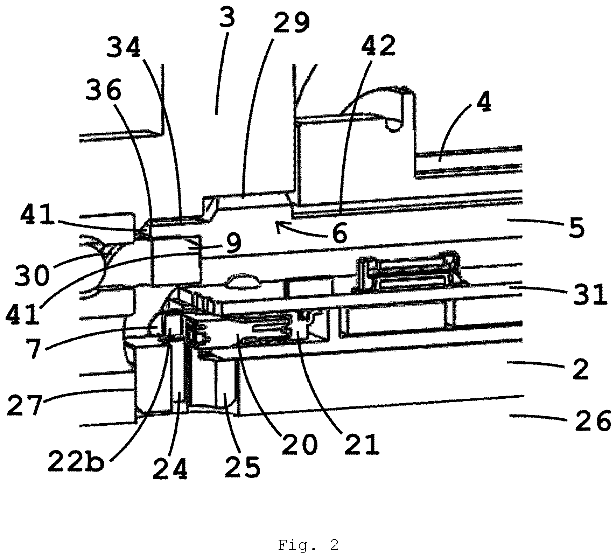

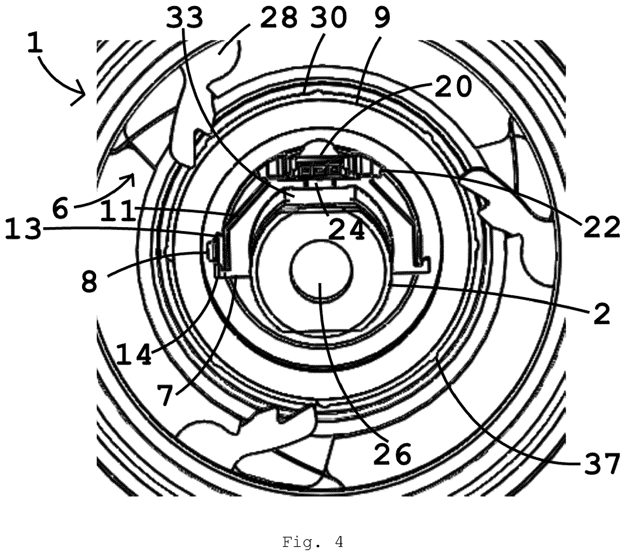

Wie es aus Figuren 2 bis 4 ersichtlich ist, weist eine Radnabe 1 für ein Antriebsrad eines Fahrzeugs eine Radachse 2, eine Klammer 7, einen Magnetfeldsensor 8 und einen Polring 9 auf. Die Klammer 7 umgreift eine Außenfläche der Radachse 2 C-förmig und ist verdrehfest gegen die Radachse 2 befestigt. Um die Klammer 7 besonders verdrehfest auszuführen, kann die Klammer 7 in Umfangsrichtung der Radachse 2 einen Winkel von größer 180°, insbesondere größer 190°, überstreichen, wie es insbesondere aus Figur 4 ersichtlich ist. Der Polring 9 ist konzentrisch um die Radachse 2 und in einem Abstand zu dem Magnetfeldsensor 8 angeordnet. Zudem ist der Polring 9 rotierbar relativ zu der Radachse 2 gelagert. Der Polring 9 weist abwechselnd in seiner Umfangsrichtung magnetische Nordpole und magnetische Südpole auf, wobei prinzipiell auch ein einzelner der Nordpole und ein einzelner der Südpole denkbar ist. Der Magnetfeldsensor 8 ist an der Klammer 7 befestigt und eingerichtet, ein von dem Polring 9 ausgehendes Magnetfeld zu detektieren, so dass auf eine Bewegung des Polrings 9 relativ zu der Radachse 2 zurückschließbar ist. Mittels der Klammer 7 ist es vorteilhaft möglich, den Abstand des Magnetfeldsensors 8 zu dem Polring 9 mit einer hohen Genauigkeit festzulegen. Bei dem Abstand des Magnetfeldsensors 8 zu dem Polring 9 gemäß Figuren 2 bis 4 handelt es sich um einen Radialabstand, wobei der Magnetfeldsensor 8 und der Polring 9 in einer gleichen axialen Position angeordnet sind. Damit ist gemäß Figuren 2 bis 4 kein Axialabstand vorgesehen. Alternativ ist denkbar, dass es sich bei dem Abstand des Magnetfeldsensors 8 zu dem Polring 9 um einen Axialabstand handelt und dass der Magnetfeldsensor 8 und der Polring 9 in der gleichen radialen Position angeordnet sind. Zudem ist denkbar, dass sowohl ein Radialabstand als auch ein Axialabstand vorgesehen sind. Wenn der Radialabstand und kein Axialabstand vorgesehen sind, kann eine dem Polring 9 zugewandte Oberfläche des Magnetfeldsensors 8 senkrecht zu einer Radialrichtung der Radnabe 1 angeordnet sein, wie es beispielsweise in Figur 4 dargestellt ist.

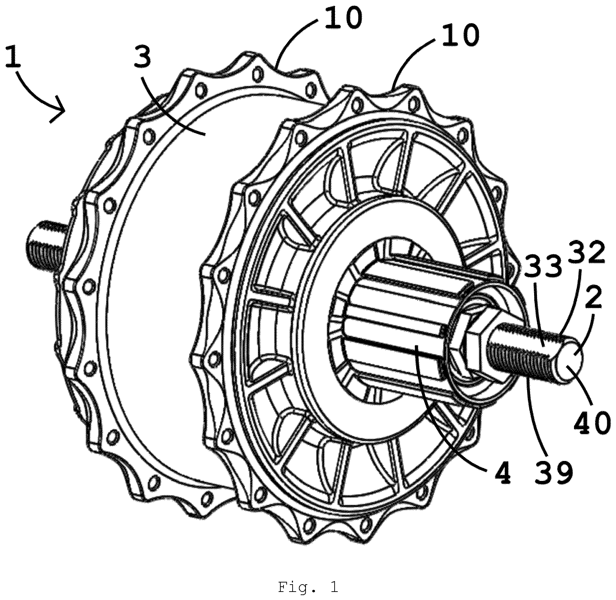

Wie es aus Figur 1 ersichtlich ist, kann die Radnabe 1 ein Nabengehäuse 3 aufweisen. Die Radnabe 1 kann einen Motor aufweisen, der innerhalb des Nabengehäuses 3 angeordnet ist und eingerichtet ist, das Antriebsrad anzutreiben. Die Radachse 2 kann einteilig ausgeführt sein. Alternativ kann die Radachse 2 zweiteilig mit zwei Teilradachsen ausgeführt sein, die einen Axialabstand zueinander haben. Der Raum zwischen den zwei Teilradachsen kann von dem Motor genutzt werden. Bei dem Motor kann es sich um einen Elektromotor handeln. Das Nabengehäuse 3 kann außerhalb zwei Speichenflansche 10 mit Löchern aufweisen, die dazu vorgesehen sind, Speichen des Antriebsrades einzuhängen. Die Radachse 2 ist dazu vorgesehen, fest an einem hilfsangetriebenen Fahrzeug angebracht zu sein, das das Antriebsrad aufweist. Beispielsweise kann die Radachse 2 fest an einem Rahmen eines Elektrofahrrads angebracht sein. Dazu kann wie in Figur 1 dargestellt, an den beiden Längsenden der Radachse 2 jeweils ein Gewinde 32 vorgesehen sein. Der Polring 9 kann verdrehfest mit dem Nabengehäuse 3 angeordnet sein. Dadurch wird immer dann eine relative Bewegung zwischen dem Polring 9 und der Radachse 2 messbar sein, wenn das Antriebsrad relativ zu der Radachse 2 rotiert. Alternativ ist es denkbar, dass der Polring 9 verdrehfest mit einem Ritzelträger 4 der Radnabe 1 angeordnet ist, wobei auf dem Ritzelträger 4 zum Antreiben des Antriebsrads mindestens ein Ritzel drehstarr montierbar ist. Dadurch wird immer dann eine relative Bewegung zwischen dem Polring 9 und der Radachse 2 messbar sein, wenn der Ritzelträger 4 relativ zu der Radachse 2 rotiert.

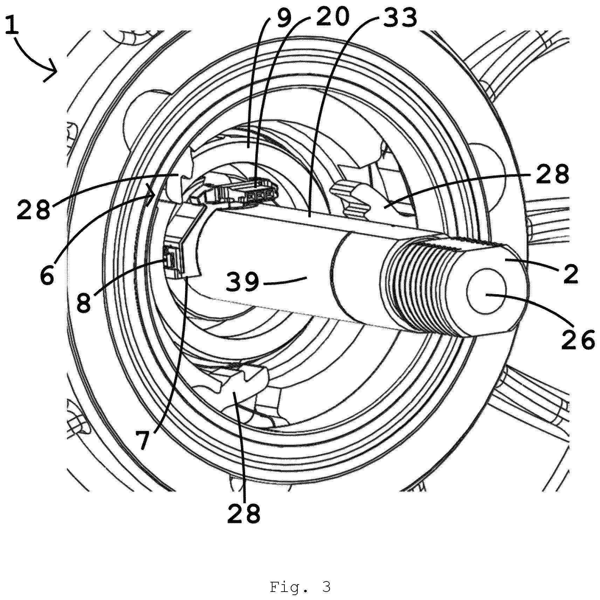

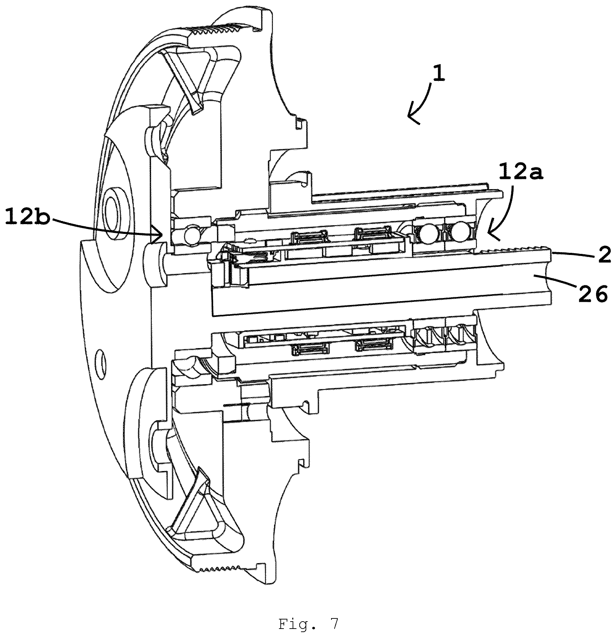

Wie es aus Figur 2 ersichtlich ist, kann die Radnabe 1 den Ritzelträger 4, eine Übertragungshülse 5, das Nabengehäuse 3 und einen Freilauf 6 aufweisen. Auf den Ritzelträger 4 ist zum Antreiben des Antriebsrads mindestens ein Ritzel drehstarr montierbar. Die Übertragungshülse 5 ist mit dem Ritzelträger 4 drehstarr gekuppelt sowie konzentrisch um die Radachse 2 und rotierbar relativ zu der Radachse 2 gelagert. Alternativ zu dem Ritzelträger 4 kann auch eine Riemenscheibe vorgesehen werden, die eingerichtet ist, von einem Riemen, insbesondere ein Zahnriemens, angetrieben zu werden und die drehstarr mit der Übertragungshülse 5 gekoppelt ist. Der Polring 9 ist drehstarr an der Übertragungshülse 5 befestigt. Die Übertragungshülse 5 ist via den Freilauf 6 mit dem Nabengehäuse 3 gekuppelt. Die Übertragungshülse 5 hat ein erstes Längsende 35 und ein zweites Längsende 36, wobei das erste Längsende 35 das axial außen liegende Längsende der Übertragungshülse 5 ist. Wie in Figur 7 dargestellt, kann die Übertragungshülse 5 mit dem Ritzelträger 4 im Bereich des ersten Längsendes 35 drehstarr gekuppelt sein und kann der Freilauf 6 im Bereich des zweiten Längsendes 36 angeordnet sein. Zudem ist es denkbar, dass im Bereich des ersten Längsendes 36 ein erstes Lager 12a vorgesehen ist, das in Radialrichtung zwischen der Radachse 2 und der Übertragungshülse 5 angeordnet ist und die Übertragungshülse 5 rotierbar relativ zu der Radachse 2 lagert. Zudem ist es denkbar, dass ein zweites Lager 12b vorgesehen ist, das in einer Axialposition, die frei von der Übertragungshülse 5 ist, und in Radialrichtung zwischen der Radachse 2 und dem Nabengehäuse 3 angeordnet ist und das Nabengehäuse 3 rotierbar relativ zu der Radachse 2 lagert. Figuren 3 und 4 zeigen, dass der Freilauf 6 von einer Mehrzahl an Sperrklinken 28, die an dem Nabengehäuse 3 befestigt sind, und von einem Sperrrad 29 gebildet ist, das von der Übertragungshülse 5 gebildet ist. Das Sperrrad 29 kann mehrere Zapfen aufweisen, die an der Außenfläche der Übertragungshülse 5 angeordnet sind und bei Rotation des Freilaufs 6 in dessen Sperrrichtung in die Sperrklinken 28 eingreifen.

Zum Befestigen des Polrings 9 an der Übertragungshülse 5 kann die Übertragungshülse 5 an ihrer Stirnseite 41 im Bereich des zweiten Längsendes einen ringförmigen Übertragungshülsenvorsprung 34 aufweisen, der in Axialrichtung von der Übertragungshülse 5 vorsteht. Der Polring 9 kann innerhalb des Übertragungshülsenvorsprungs 34 angeordnet und von diesem abgestützt sein. Zudem kann, wie in Figur 2 dargestellt, der Polring 9 die Stirnseite der Übertragungshülse 5 kontaktieren. Dadurch wird eine Festlegung der Position des Polrings 9 in Axialrichtung erreicht. Zudem ist denkbar, dass zwischen dem Polring 9 und dem Übertragungshülsenvorsprung 34 ein Klemmring 30 angeordnet ist, wobei der Klemmring 30 radial außen den Übertragungshülsenvorsprung 34 und radial innen den Polring 9 kontaktiert. Der Klemmring 30 kann, wie in Figuren 3 und 4 dargestellt, in Umfangsrichtung beabstandete Klemmringvorsprünge 37 aufweisen, die in entsprechende Übertragungshülsenaussparungen eingreifen, die in den Übertragungshülsenvorsprung 34 eingebracht sind. Der Klemmring 30 kann beispielsweise Kunststoff, Stahl oder Federstahl aufweisen oder aus Kunststoff, Stahl oder Federstahl bestehen.

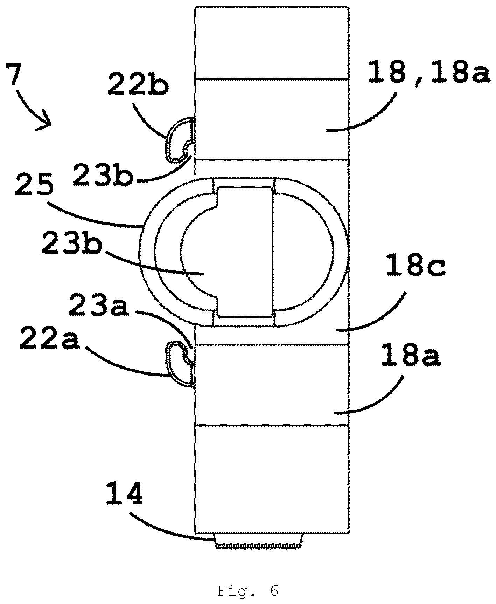

Wie es aus Figuren 2 bis 4 ersichtlich ist, kann die Radachse 2 zumindest teilweise als eine Hohlwelle ausgeführt sein und somit einen Hohlraum 26 aufweisen. Der Hohlraum 26 kann sich, wie in Figur 4 dargestellt, entlang der gesamten Länge der Radachse 2 erstrecken. Zudem zeigt Figur 2, dass die Radachse 2 ein Radachsendurchgangsloch 27 aufweist, das sich durch die Radachse 2 von der Außenfläche 39 der Radachse 2 bis zu dem Hohlraum 26 erstreckt. Die Klammer 7 weist ein Klammerdurchgangsloch 24 und einen das Klammerdurchgangsloch 24 begrenzenden Bereich auf, der formschlüssig in das Radachsendurchgangsloch 27 eingreift. Der das Klammerdurchgangsloch 24 begrenzende Bereich kann von einem Ring 25 gebildet sein. Der Ring 25 kann kreisförmig sein und kann auch, wie in Figur 6 dargestellt, eine von der Kreisform abweichende Form haben. Eine elektrische Verkabelung des Magnetfeldsensors 8 kann durch das Klammerdurchgangsloch 24 und durch das Radachsendurchgangsloch 27 in den Hohlraum 26 geführt sein. Die elektrische Verkabelung des Magnetfeldsensors 8 kann dann an einer anderen Stelle der Radachse 2 aus der Radachse 2 herausgeführt werden. Bei der anderen Stelle kann es sich beispielsweise um eine Stirnfläche 40 der Radachse 2 handeln und/oder die Radachse 2 kann eine Radachsenaussparung aufweisen, die sich durch die Radachse 2 von der Außenfläche der Radachse 2 bis zu dem Hohlraum 26 erstreckt.

Figur 2 zeigt, dass die Radnabe 1 eine Drehmomentmessvorrichtung aufweisen kann. Dazu weist die Übertragungshülse 5 ein magnetisch codiertes Material auf, dessen magnetische Eigenschaften sich aufgrund von Magnetostriktion unter dem Einfluss eines auf die Übertragungshülse 5 wirkenden Drehmoments ändern. Zum Messen des Drehmoments weist die Drehmomentmessvorrichtung eine Drehmomentmessleiterplatte 31 und einen Sensor (nicht dargestellt) auf, der an der Drehmomentmessleiterplatte 31 angeordnet ist und eingerichtet ist, die sich ändernden magnetischen Eigenschaften zu detektieren. Aus den sich ändernden magnetischen Eigenschaften, die von dem Sensor detektiert werden, kann auf das Drehmoment zurückgeschlossen werden, das an der Übertragungshülse 5 anliegt. Dies kann beispielsweise unter Zuhilfenahme einer Kalibrierungsmessung erfolgen, bei der die Übertragungshülse 5 mit mehreren verschiedenen Drehmomenten beaufschlagt wird und das von dem Sensor aufgenommene Messsignal aufgenommen wird. Der Sensor kann eine Spule oder mehrere Spulen aufweisen.

Zudem zeigt Figur 2, dass die Radnabe 1 ein erstes Steckerteil 20 aufweisen kann, das an der Klammer 7 befestigt ist, und dass die Drehmomentmessvorrichtung ein zweites Steckerteil 21 aufweisen kann, das an der Drehmomentmessleiterplatte 31 befestigt ist und mit dem ersten Steckerteil 20 in Eingriff steht. Eine elektrische Verkabelung der Drehmomentmessvorrichtung ist via das erste Steckerteil 20 und via das zweite Steckerteil 21 geführt. Zudem kann die elektrische Verkabelung der Drehmomentmessvorrichtung durch das Klammerdurchgangsloch 24 und durch das Radachsendurchgangsloch 27 geführt sein. In diesem Fall können die elektrische Verkabelung des Magnetfeldsensors 8 und die elektrische Verkabelung der Drehmomentmessvorrichtung zu einem einzigen Kabelstrang zusammengefasst sein. Bei dem ersten Steckerteil 20 und dem zweiten Steckerteil 21 kann es sich um einen Molex-Steckverbinder handeln.

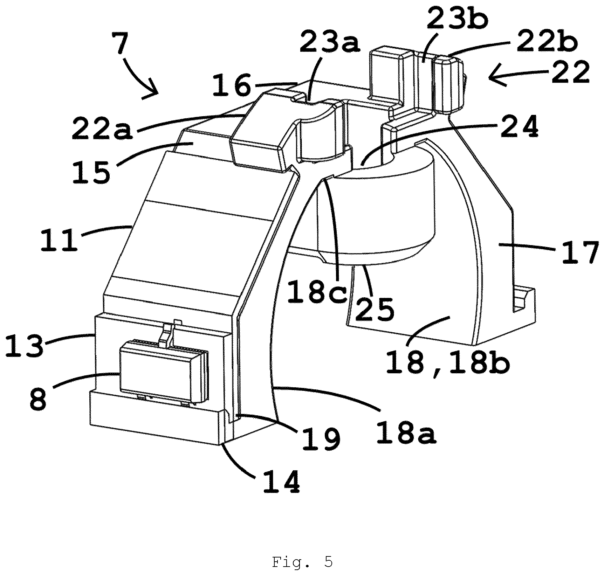

Wie es aus Figur 5 ersichtlich ist, kann die Klammer 7 einen Steckerteilhalter 22 aufweisen, der eingerichtet ist, das erste Steckerteil 20 zu halten. Dazu weist der Steckerteilhalter 22 ein erstes Steckerteilhalterteil 22a mit einer ersten Aussparung 23a und ein zweites Steckerteilhalterteil 22b mit einer zweiten Aussparung 23b auf. Das Klammerdurchgangsloch 24 ist in Umfangsrichtung zwischen dem ersten Steckerteilhalterteil 22a und dem zweiten Steckerteilhalterteil 22b angeordnet. Die erste Aussparung 23a und die zweite Aussparung 23b sind einander zugewandt und eingerichtet, mit entsprechenden Vorsprüngen des ersten Steckerteils 20 in Eingriff zu stehen. Zudem zeigt Figur 5, dass die Klammer 7 eine erste Stirnfläche 16 und eine zweite Stirnfläche 17 aufweist, wobei die zweite Stirnfläche 17 der ersten Stirnfläche 16 abgewandt angeordnet ist und der Drehmomentmessvorrichtung zugewandt angeordnet ist. Das erste Steckerteil 20 steht über die erste Stirnfläche 17 vor.

Wie es aus Figuren 3 und 4 ersichtlich ist, kann die Radachse 2 an der Außenfläche der Radachse 2 einen abgeflachten Bereich 33 aufweisen. Eine Innenfläche 18 der Klammer 7 weist zwei kreisbogenförmige Abschnitte 18a, 18b und dazwischen einen geraden Abschnitt 18c auf, wobei die zwei kreisbogenförmigen Abschnitte 18a, 18b und der gerade Abschnitt 18c in Umfangsrichtung der Radachse 2 nebeneinander angeordnet sind. Der gerade Abschnitt 18c ist in Umfangsrichtung so lang wie der abgeflachte Bereich 33 in der Umfangsrichtung und kontaktiert den abgeflachte Bereich 33 entlang dessen gesamter Länge in der Umfangsrichtung. Die kreisbogenförmigen Abschnitte 18a, 18b kontaktieren die benachbart zu dem abgeflachten Bereich 33 angeordneten Bereiche der Radachse 2, die ebenfalls kreisbogenförmig sind. Figuren 3 und 4 zeigen, dass das Radachsendurchgangsloch 27 sich durch den abgeflachten Bereich 33 der Radachse 2 erstrecken kann und dass das Klammerdurchgangsloch 24 sich durch den geraden Abschnitt 18c der Innenfläche 18 erstrecken kann.

Figuren 3 bis 5 zeigen, dass der Magnetfeldsensor 8 an einer Außenfläche 15 der Klammer 7 angeordnet sein kann. Dazu kann die Klammer 7 einen L-förmigen Vorsprung 14 mit zwei Schenkeln aufweisen, der von der Außenfläche 15 der Klammer 7 vorsteht, so dass zwischen dem einen der zwei Schenkel und der Außenfläche 15 der Klammer 7 eine Aussparung 19 gebildet ist. Die Radnabe 1 weist eine Magnetfeldsensorleiterplatte 13 auf, auf der der Magnetfeldsensor 8 angeordnet ist und die in der Aussparung 10 angeordnet ist. Die Magnetfeldsensorleiterplatte 13 ist zwischen einem der beiden Schenkel und der Außenfläche 15 der Klammer 7 eingeklemmt, so dass sie in einem Betrieb der Radnabe 1 nicht aus der Aussparung gelangen kann, und stößt an den anderen der beiden Schenkel an. Zudem weist die Radnabe 1 eine Leiterbahn 11 auf, die eingerichtet ist, den Magnetfeldsensor 8 mit Strom zu versorgen, und zwischen der Magnetfeldsensorleiterplatte 13 und der Außenfläche 15 der Klammer 7 eingeklemmt ist.

Außerdem kann die Radnabe 1 eine elektrische Schaltung aufweisen, die eingerichtet ist, ein Messsignal des Magnetfeldsensors 8 zu verarbeiten, und die auf der Leiterbahn 11 angeordnet ist. Bei dem Messsignal kann es sich beispielsweise um Impulse handeln. Die Radnabe 1 weist ein Elektronikgehäuse auf, das ebenfalls auf der Leiterbahn 11 angeordnet ist und die elektrische Schaltung einhaust. Die elektrische Schaltung kann in Umfangsrichtung der Radachse 2 zwischen dem Magnetfeldsensor 8 und dem Klammerdurchgangsloch 24 angeordnet sein.

Wie es aus Figur 4 ersichtlich ist, kann ein erster Abschnitt der Klammer 7, an dem der Magnetfeldsensor 8 angeordnet ist, dicker als ein zweiter Abschnitt der Klammer 7 sein, an dem die elektrische Schaltung angeordnet ist. Dadurch ist erreicht, dass der Magnetfeldsensor 8 nahe am dem Polring 9 angeordnet ist und dass gleichzeitig der elektrischen Schaltung zwischen der Klammer 7 und dem Polring 9 ein großer Raum zur Verfügung steht.

Die Klammer 7 kann aus einem elastischen Material sein, insbesondere einem elastischen Kunststoff. Bei dem elastischen Kunststoff kann es sich um Polyamid handeln.

### Bezugszeichenliste

1 Radnabe
2 Radachse
3 Nabengehäuse
4 Ritzelträger
5 Übertragungshülse
6 Freilauf
7 Klammer
8 Magnetfeldsensor
9 Polring
10 Speichenflansch
11 Leiterbahn
12a erstes Lager
12b zweites Lager
13 Magnetfeldsensorleiterplatte
14 Vorsprung
15 Außenfläche
16 erste Stirnfläche
17 zweite Stirnfläche
18 Innenfläche
18a kreisbogenförmiger Abschnitt der Innenfläche
18b kreisbogenförmiger Abschnitt der Innenfläche
18c gerader Abschnitt der Innenfläche
19 Aussparung
20 erstes Steckerteil
21 zweites Steckerteil
22 Steckerteilhalter
22a erstes Steckerteilhalterteil
22b zweites Steckerteilhalterteil
23a erste Aussparung
23b zweite Aussparung
24 Klammerdurchgangsloch
25 Ring
26 Hohlraum
27 Radachsendurchgangsloch
28 Sperrklinke
29 Sperrrad
30 Klemmring
31 Drehmomentmessleiterplatte
32 Gewinde
33 abgeflachter Bereich der Radachse
34 Übertragungshülsenvorsprung
35 erstes Längsende
36 zweites Längsende
37 Klemmringvorsprung
39 Außenfläche der Radachse
40 Stirnfläche der Radachse
41 Stirnfläche der Übertragungshülse im Bereich des zweiten
Längsendes
42 Außenfläche der Übertragungshülse

## Patentansprüche

1. Radnabe (1) für ein Antriebsrad eines Fahrzeugs, mit einer Radachse (2), einer Klammer (7), die verdrehfest gegen die Radachse (2) befestigt ist, einem Magnetfeldsensor (8), der an der Klammer (7) befestigt ist, und einem Polring (9), der konzentrisch um die Radachse (2) und in einem Abstand zu dem Magnetfeldsensor (8) angeordnet sowie rotierbar relativ zu der Radachse (2) gelagert ist, wobei der Magnetfeldsensor (8) eingerichtet ist, ein von dem Polring (9) ausgehendes Magnetfeld zu detektieren, so dass auf eine Bewegung des Polrings (9) relativ zu der Radachse (2) zurückschließbar ist, **dadurch gekennzeichnet, dass** die Klammer (7) die Radachse (2) C-förmig umgreift.

2. Radnabe (1) gemäß Anspruch 1, wobei die Radnabe (1) eine Riemenscheibe oder einen Ritzelträger (4), auf den zum Antreiben des Antriebsrads mindestens ein Ritzel drehstarr montierbar ist, eine Übertragungshülse (5), die mit der Riemenscheibe oder dem Ritzelträger (4) drehstarr gekuppelt ist sowie konzentrisch um die Radachse (2) und rotierbar relativ zu der Radachse (2) gelagert ist, ein Nabengehäuse (3) und einen Freilauf (6) aufweist, via den die Übertragungshülse (5) mit dem Nabengehäuse (3) gekuppelt ist, wobei der Polring (9) drehstarr an der Übertragungshülse (5) befestigt ist.

3. Radnabe (1) gemäß Anspruch 1 oder 2, wobei die Radachse (2) zumindest teilweise als eine Hohlwelle ausgeführt ist und somit einen Hohlraum (26) aufweist sowie ein Radachsendurchgangsloch (27) aufweist, das sich durch die Radachse von der Außenfläche der Radachse (2) bis zu dem Hohlraum (26) erstreckt, wobei die Klammer (7) ein Klammerdurchgangsloch (24) und einen das Klammerdurchgangsloch (24) begrenzenden Bereich aufweist, der formschlüssig in das Radachsendurchgangsloch (27) eingreift.

4. Radnabe (1) gemäß Anspruch 3, wobei eine elektrische Verkabelung des Magnetfeldsensors (8) durch das Klammerdurchgangsloch (24) und durch das Radachsendurchgangsloch (27) in den Hohlraum (26) geführt ist.

5. Radnabe (1) gemäß einem der Ansprüche 1 bis 4, wobei die Radachse (2) an der Außenfläche der Radachse (2) einen abgeflachten Bereich (33) aufweist und eine Innenfläche (18) der Klammer (7) zwei kreisbogenförmige Abschnitte (18a, 18b) und dazwischen einen geraden Abschnitt (18c) aufweist, wobei die zwei kreisbogenförmigen Abschnitte (18a, 18b) und der gerade Abschnitt (18c) in Umfangsrichtung der Radachse (2) nebeneinander angeordnet sind, wobei der gerade Abschnitt den abgeflachten Bereich (33) kontaktiert und die kreisbogenförmigen Abschnitte (18a, 18b) die benachbart zu dem abgeflachten Bereich (33) angeordneten Bereiche der Radachse (2) kontaktieren.

6. Radnabe (1) gemäß einem der Ansprüche 1 bis 5, wobei der Magnetfeldsensor (8) an einer Außenfläche (15) der Klammer (7) angeordnet ist.

7. Radnabe (1) gemäß Anspruch 6, wobei die Klammer (7) einen L-förmigen Vorsprung (14) mit zwei Schenkeln aufweist, der von der Außenfläche (15) der Klammer (7) vorsteht, und die Radnabe (1) eine Magnetfeldsensorleiterplatte (13) aufweist, auf der der Magnetfeldsensor (8) angeordnet ist, wobei die Magnetfeldsensorleiterplatte (13) zwischen einem der beiden Schenkel und der Außenfläche (15) der Klammer (7) eingeklemmt ist.

8. Radnabe (1) gemäß einem der Ansprüche 1 bis 7, wobei die Klammer (7) aus einem elastischen Material ist, insbesondere einem elastischen Kunststoff.

9. Radnabe (1) gemäß einem der Ansprüche 1 bis 8, wobei die Radnabe (1) eine Drehmomentmessvorrichtung aufweist.

10. Radnabe (1) gemäß Anspruch 9, wobei die Radnabe (1) ein erstes Steckerteil (20) aufweist, das an der Klammer (7) befestigt ist, und die Drehmomentmessvorrichtung eine Drehmomentmessleiterplatte (31) mit einem zweiten Steckerteil (21) aufweist, das an der Drehmomentmessleiterplatte (31) befestigt ist und mit dem ersten Steckerteil (20) in Eingriff steht.

11. Radnabe (1) gemäß Anspruch 10, wobei eine elektrische Verkabelung der Drehmomentmessvorrichtung via das erste Steckerteil (20) und via das zweite Steckerteil (21) geführt ist.

12. Radnabe (1) gemäß Anspruch 10 oder 11, wobei die Radnabe (1) eine Riemenscheibe oder einen Ritzelträger (4), auf den zum Antreiben des Antriebsrads mindestens ein Ritzel drehstarr montierbar ist, eine Übertragungshülse (5), die mit der
Riemenscheibe oder dem Ritzelträger (4) drehstarr gekuppelt ist sowie konzentrisch um die Radachse (2) und rotierbar relativ zu der Radachse (2) gelagert ist, ein Nabengehäuse (3) und einen Freilauf (6) aufweist, via den die Übertragungshülse (5) mit dem Nabengehäuse (3) gekuppelt ist, wobei die
Übertragungshülse (5) ein magnetisch codiertes Material aufweist, dessen magnetische Eigenschaften sich unter dem Einfluss eines auf die Übertragungshülse (5) wirkenden Drehmoments ändern, und die Drehmomentmessvorrichtung einen an der Drehmomentmessleiterplatte (31) angeordneten Sensor aufweist, der eingerichtet ist, die sich ändernden magnetischen Eigenschaften zu detektieren.

13. Radnabe (1) gemäß einem der Ansprüche 1 bis 12, wobei die Radnabe (1) einen Motor aufweist, der eingerichtet ist, das Antriebsrad anzutreiben.

14. Hilfsangetriebenes Fahrzeug mit einer Radnabe (1) gemäß Anspruch 13, dem Antriebsrad und einer Steuerungseinrichtung, die eingerichtet ist, den Motor abgestimmt auf von dem Magnetfeldsensor gemessene Messdaten zu steuern, wobei die Steuerungseinrichtung insbesondere eingerichtet ist, den Motor zusätzlich abgestimmt auf von der Drehmomentmessvorrichtung gemessene Messdaten zu steuern, wobei das hilfsangetriebene Fahrzeug insbesondere ein Elektrofahrrad mit einem Speicher ist, der eingerichtet ist, elektrische Energie zu speichern und an den Motor abzugeben.

15. Klammeranordnung für eine Radnabe (1) nach einem der Ansprüche 1 bis 13 mit einer Radachse, die Klammeranordnung aufweisend eine Klammer (7), die eingerichtet ist, die Radachse (2) C-förmig zu umgreifen und verdrehfest gegen die Radachse (2) befestigt zu sein, und einem Magnetfeldsensor (8), der an der Klammer (7) befestigt ist.

## Claims

1. A wheel hub (1) for a drive wheel of a vehicle, comprising a wheel axle (2), a clip (7) which is fixed against the wheel axle (2) in a rotationally fixed manner, a magnetic field sensor (8) which is fixed to the clip (7), and a pole ring (9) which is arranged concentrically around the wheel axle (2) and at a distance from the magnetic field sensor (8) and is mounted so as to be rotatable relative to the wheel axle (2), the magnetic field sensor (8) being configured to detect a magnetic field emanating from the pole ring (9), so that a movement of the pole ring (9) relative to the wheel axle (2) can be inferred, **characterized in that** the clip (7) encompasses the wheel axle (2) in a C-shaped manner.

2. The wheel hub (1) according to claim 1, wherein the wheel hub (1) comprises a belt pulley or a pinion carrier (4), on which at least one pinion can be mounted in a rotationally rigid manner for driving the drive wheel, a transmission sleeve (5) which is coupled in a rotationally rigid manner to the belt pulley or the pinion carrier (4) and is mounted concentrically about the wheel axle (2) and so as to be rotatable relative to the wheel axle (2), a hub housing (3) and a freewheel (6), via which the transmission sleeve (5) is coupled to the hub housing (3), the pole ring (9) being fixed in a rotationally rigid manner to the transmission sleeve (5).

3. The wheel hub (1) according to claim 1 or 2, wherein the wheel axle (2) is designed at least partially as a hollow shaft and thus comprises a cavity (26) and a wheel axle through-hole (27) which extends through the wheel axle from the outer surface of the wheel axle (2) to the cavity (26), the clip (7) having a clip through-hole (24) and an area which delimits the clip through-hole (24) and engages the wheel axle through-hole (27) in a form-fitting manner.

4. The wheel hub (1) according to claim 3, wherein an electrical wiring of the magnetic field sensor (8) is routed through the clip through-hole (24) and through the wheel axle through-hole (27) into the cavity (26).

5. The wheel hub (1) according to any one of claims 1 to 4, wherein the wheel axle (2) comprises a flattened area (33) on the outer surface of the wheel axle (2) and an inner surface (18) of the clip (7) comprises two circular arc-shaped portions (18a, 18b) and a straight portion (18c) therebetween, the two circular arc-shaped portions (18a, 18b) and the straight portion (18c) being arranged next to one another in the circumferential direction of the wheel axle (2), the straight portion contacting the flattened area (33) and the circular arc-shaped portions (18a, 18b) contacting the areas of the wheel axle (2) which are arranged adjacent to the flattened area (33).

6. The wheel hub (1) according to any one of claims 1 to 5, wherein the magnetic field sensor (8) is arranged on an outer surface (15) of the clip (7).

7. The wheel hub (1) according to claim 6, wherein the clip (7) comprises an L-shaped projection (14) having two legs, which projects from the outer surface (15) of the clip (7), and the wheel hub (1) comprises a magnetic field sensor circuit board (13) on which the magnetic field sensor (8) is arranged, the magnetic field sensor circuit board (13) being clamped between one of the two legs and the outer surface (15) of the clip (7).

8. The wheel hub (1) according to any one of claims 1 to 7, wherein the clip (7) is made of an elastic material, in particular an elastic synthetic material.

9. The wheel hub (1) according to any one of claims 1 to 8, wherein the wheel hub (1) comprises a torque measuring device.

10. The wheel hub (1) according to claim 9, wherein the wheel hub (1) comprises a first connector part (20) which is fixed to the clip (7), and the torque measuring device comprises a torque measuring circuit board (31) having a second connector part (21) which is fixed to the torque measuring circuit board (31) and is in engagement with the first connector part (20).

11. The wheel hub (1) according to claim 10, wherein an electrical wiring of the torque measuring device is routed via the first connector part (20) and the second connector part (21).

12. The wheel hub (1) according to claim 10 or 11,
wherein the wheel hub (1) comprises a belt pulley or a pinion carrier (4), on which at least one pinion can be mounted in a rotationally rigid manner for driving the drive wheel, a transmission sleeve (5) which is coupled in a rotationally rigid manner to the belt pulley or the pinion carrier (4) and is mounted concentrically about the wheel axle (2) and so as to be rotatable relative to the wheel axle (2), a hub housing (3) and a freewheel (6), via which the transmission sleeve (5) is coupled to the hub housing (3), the transmission sleeve (5) comprising a magnetically coded material whose magnetic properties change under the influence of a torque acting on the transmission sleeve (5), and the torque measuring device comprising a sensor which is arranged on the torque measuring circuit board (31) and configured to detect the changing magnetic properties.

13. The wheel hub (1) according to any one of claims 1 to 12, wherein the wheel hub (1) comprises a motor configured to drive the drive wheel.

14. An auxiliary powered vehicle comprising a wheel hub (1) according to claim 13, the drive wheel and a control device which is configured to control the motor in coordination with measurement data measured by the magnetic field sensor, wherein the control device is in particular configured to additionally control the motor in coordination with measurement data measured by the torque measuring device, the auxiliary powered vehicle being in particular an electric bicycle including a accumulator device which is configured to store electrical energy and to deliver it to the motor.

15. A clip arrangement for a wheel hub (1) according to any one of claims 1 to 13, comprising a wheel axle, the clip arrangement comprising a clip (7) which is configured to encompass the wheel axle (2) in a C-shaped manner and to be fixed against the wheel axle (2) in a rotationally fixed manner, and a magnetic field sensor (8) which is fixed to the clip (7).

## Revendications

1. Moyeu de roue (1) pour une roue motrice d'un véhicule, comprenant un axe de roue (2), une pince (7) qui est fixée de manière à ne pas pouvoir tourner contre l'axe de roue (2), un capteur de champ magnétique (8) qui est fixé à la pince (7), et une bague polaire (9) qui est disposée de manière concentrique autour de l'axe de roue (2) et à une certaine distance du capteur de champ magnétique (8) et qui est montée de manière à pouvoir tourner par rapport à l'axe de roue (2), le capteur de champ magnétique (8) étant agencé pour détecter un champ magnétique émanant de la bague polaire (9), de sorte que l'on peut en déduire un mouvement de la bague polaire (9) par rapport à l'axe de roue (2), **caractérisé en ce que** la pince (7) entoure l'axe de roue (2) en forme de C.

2. Le moyeu de roue (1) selon la revendication 1, sachant que le moyeu de roue (1) comprend une poulie ou un support de pignon (4) sur lequel au moins un pignon peut être monté de manière rigide en rotation pour entraîner la roue motrice, une douille de transmission (5), qui est couplée de manière rigide en rotation à la poulie ou au support de pignon (4) et qui est montée concentriquement autour de l'axe de roue (2) et de manière à pouvoir tourner par rapport à l'axe de roue (2), un carter de moyeu (3) et une roue libre (6) par laquelle la douille de transmission (5) est couplée au carter de moyeu (3), la bague polaire (9) étant fixée de manière rigide en rotation à la douille de transmission (5).

3. Le moyeu de roue (1) selon la revendication 1 ou 2, sachant que l'axe de roue (2) est réalisé au moins partiellement sous la forme d'un arbre creux et présente ainsi une cavité (26) ainsi qu'un trou de passage d'axe de roue (27) qui s'étend à travers l'axe de roue depuis la surface extérieure de l'axe de roue (2) jusqu'à la cavité (26), la pince (7) présentant un trou de passage de la pince (24) et une zone délimitant le trou de passage de la pince (24) qui s'engage par complémentarité de forme dans le trou de passage d'axe de roue (27).

4. Le moyeu de roue (1) selon la revendication 3, sachant qu'un câblage électrique du capteur de champ magnétique (8) est guidé dans la cavité (26) à travers le trou de passage de la pince (24) et le trou de passage d'axe de roue (27).

5. Le moyeu de roue (1) selon l'une quelconque des revendications 1 à 4, sachant que l'axe de roue (2) comprend une zone aplatie (33) sur la surface extérieure de l'axe de roue (2) et une surface intérieure (18) de la pince (7) comprend deux sections en arc de cercle (18a, 18b) et une section droite (18c) entre celles-ci, les deux sections en arc de cercle (18a, 18b) et la section droite (18c) étant disposées côte à côte dans la direction circonférentielle de l'axe de roue (2), la section droite étant en contact avec la zone aplatie (33) et les sections en arc de cercle (18a, 18b) étant en contact avec les zones de l'axe de roue (2) situées à proximité de la zone aplatie (33).

6. Le moyeu de roue (1) selon l'une des revendications 1 à 5, sachant que le capteur de champ magnétique (8) est disposé sur une surface extérieure (15) de la pince (7).

7. Le moyeu de roue (1) selon la revendication 6, sachant que la pince (7) comprend une saillie (14) en forme de L avec deux branches faisant saillie de la surface extérieure (15) de la pince (7), et le moyeu de roue (1) comprend une carte de circuit imprimé de capteur de champ magnétique (13) sur laquelle est disposé le capteur de champ magnétique (8), la carte de circuit imprimé de capteur de champ magnétique (13) étant serrée entre une des deux branches et la surface extérieure (15) de la pince (7).

8. Le moyeu de roue (1) selon l'une des revendications 1 à 7, sachant que la pince (7) est en un matériau élastique, notamment une matière synthétique élastique.

9. Le moyeu de roue (1) selon l'une des revendications 1 à 8, sachant que le moyeu de roue (1) comprend un dispositif de mesure de couple.

10. Le moyeu de roue (1) selon la revendication 9, sachant que le moyeu de roue (1) comprend une première partie de connecteur (20) fixée à la pince (7) et le dispositif de mesure de couple comprend une carte de circuit imprimé de mesure de couple (31) comprenant une deuxième partie de connecteur (21) fixée à la carte de circuit imprimé de mesure de couple (31) et étant en prise avec la première partie de connecteur (20).

11. Le moyeu de roue (1) selon la revendication 10, sachant qu'un câblage électrique du dispositif de mesure de couple est guidé via la première partie de connecteur (20) et la deuxième partie de connecteur (21).

12. Le moyeu de roue (1) selon la revendication 10 ou 11, le moyeu de roue (1) comprenant une poulie ou un support de pignon (4) sur lequel au moins un pignon peut être monté de manière rigide en rotation pour entraîner la roue motrice, une douille de transmission (5), qui est couplée de manière rigide en rotation à la poulie ou au support de pignon (4) et qui est montée de manière concentrique autour de l'axe de roue (2) et de manière à pouvoir tourner par rapport à l'axe de roue (2), un carter de moyeu (3) et une roue libre (6) par laquelle la douille de transmission (5) est couplée au carter de moyeu (3), la douille de transmission (5) présentant un matériau à codage magnétique dont les propriétés magnétiques se modifient sous l'influence d'un couple agissant sur la douille de transmission (5), et le dispositif de mesure de couple présentant un capteur disposé sur la carte de circuit imprimé de mesure de couple (31), qui est agencé pour détecter les propriétés magnétiques qui se modifient.

13. Le moyeu de roue (1) selon l'une quelconque des revendications 1 à 12, sachant que le moyeu de roue (1) comprend un moteur agencé pour entraîner la roue motrice.

14. Véhicule à propulsion auxiliaire comportant un moyeu de roue (1) selon la revendication 13, la roue motrice et un dispositif de commande agencé pour commander le moteur en fonction de données de mesure mesurées par le capteur de champ magnétique, le dispositif de commande étant notamment agencé pour commander le moteur en outre en fonction de données de mesure mesurées par le dispositif de mesure de couple, le véhicule à propulsion auxiliaire étant notamment un vélo électrique comportant un accumulateur agencé pour stocker de l'énergie électrique et la fournir au moteur.

15. Agencement de pince pour un moyeu de roue (1) selon l'une quelconque des revendications 1 à 13, comprenant un axe de roue, l'agencement de pince comprenant une pince (7) qui est agencée pour entourer l'axe de roue (2) en forme de C et pour être fixée de manière à ne pas pouvoir tourner contre l'axe de roue (2), et un capteur de champ magnétique (8) qui est fixé à la pince (7).
